# EUROPÄISCHE PATENTSCHRIFT

(11) **EP 0 530 911 B1**
(45) Veröffentlichungstag und Bekanntmachung des Hinweises auf die Patenterteilung: **04.12.1996**
(21) Anmeldenummer: 92202641.4
(22) Anmeldetag: 01.09.1992
(51) Int. Cl.: G03B 42/02

(54) **Photoleiteranordnung mit einer Ausleseeinheit**
Photoconductor assembly with a read out unit
Dispositif photoconducteur avec une unité de lecture

(30) Priorität: 05.09.1991 DE 4129469
(43) Veröffentlichungstag der Anmeldung: 10.03.1993
(73) Patentinhaber: Philips Patentverwaltung GmbH, 22335 Hamburg (DE); Philips Electronics N.V., 5621 BA Eindhoven (NL)
(72) Erfinder: Spitzmann, Gerd, c/o Philips Patentverwaltung GmbH, W-2000 Hamburg 1 (DE)
(74) Vertreter: Hartmann, Heinrich, Dipl.-Ing.

(56) Entgegenhaltungen:
- EP-A- 0 442 574
- EP-A- 0 456 322
- DE-A- 3 534 768
- DE-A- 3 842 525

## Beschreibung

Die Erfindung betrifft eine Photoleiteranordnung nach dem Oberbegriff des Anspruchs 1. Eine solche Photoleiteranordnung ist im wesentlichen aus der DE-OS 3 534 768 bekannt, sowie in EP-A-0 456 322 (Priorität: 11.05.90, Veröffentlichungstag : 13.11.91) beschrieben.

Die tatsächliche Lage der Influenzsonden darf von einer Soll-Position, die durch die Verbindungsgerade bzw. eine diese Verbindungsgerade enthaltende Verbindungsebene definiert ist, nur um etwa 0,01 mm abweichen. Deshalb wird bei der aus der EP-A 0 442 574 bekannten Photoleiteranordnung der Abstand zwischen den Influenzsonden und dem Photoleiter fortlaufend gemessen und durch vom Meßsignal gesteuerte Verstellungsmittel konstant gehalten. Die Verstellungsmittel umfassen eine Halterung, an der zwei piezoelektrische Elemente befestigt sind, die ihrerseits die Influenzsonde tragen. Je nach Meßsignal wird die Influenzsonde zu dem Photoleiter hin oder von ihm wegbewegt.

Aufgabe der vorliegenden Erfindung ist es, eine Photoleiteranordnung der eingangs genannten Art so auszugestalten, daß die verteilten Influenzsonden möglichst den gleichen Abstand von der Oberfläche des Photoleiters haben. Diese Aufgabe wird erfindungsgemäß durch die im Anspruch 1 angegebenen Maßnahmen gelöst.

Bei der Erfindung ist die Lage der Influenzsonden durch die Lage des Grundkörpers nur näherungsweise vorgegeben. Sie kann innerhalb gewisser Grenzen durch Betätigung der Stellmittel, mit deren Hilfe sich die Lage des Sondenträgers in bezug auf den Grundkörper einstellen läßt, geändert werden. Dabei wird der Steg mehr oder weniger gebogen. Noch bessere Stellmöglichkeiten ergeben sich bei der im Anspruch 2 beschriebenen Weiterbildung der Erfindung.

Eine besonders einfache Ausgestaltung der Stellmittel ergibt sich aus Anspruch 3. Bei der Ausgestaltung der Erfindung nach Anspruch 4 folgen die Influenzsonden einer Verstellung des Sondenträgers im Bereich der Stellmittel dabei nur mit einer gewissen Untersetzung, die durch das Abstandsverhältnis bestimmt ist. Dies erleichtert die genaue Einstellung.

Die Erfindung wird nachstehend anhand der Zeichnung näher erläutert. Es zeigen
Fig. 1 ein Röntgengerät in schematischer Darstellung, bei dem die Erfindung anwendbar ist.
Fig. 2 eine schematische Seitenansicht einer erfindungsgemäßen Photoleiteranordnung,
Fig. 3 eine perspektivische Darstellung der Ausleseeinheit,
Fig. 4 eine Draufsicht auf die Photoleiteranordnung und
Fig. 5 eine Einzelheit von Fig. 4.

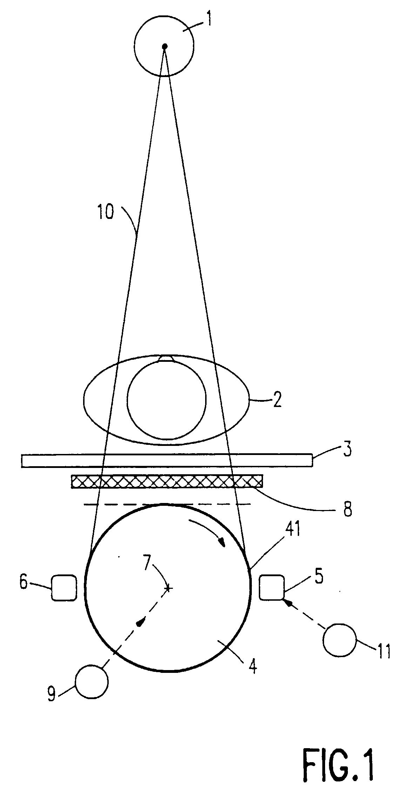

Das von dem Fokus eines Röntgenstrahlers 1 ausgehende Röntgenstrahlenbündel 10 durchsetzt einen auf einer Tischplatte 3 liegenden Patienten 2 sowie ein Streustrahlenraster 8, bevor es auf eine Trommel 4 trifft, deren zur Zeichenebene der Fig. 1 senkrechte Zylinderachse 7 gleichzeitig ihre Drehachse ist. Die Trommel 4 kann mittels eines Motorantriebes 9 um die Drehachse 7 angetrieben werden. Auf ihren Mantelflächen ist die Trommel 4 mit einem Photoleiter beschichtet, vorzugsweise mit einer 0,5 mm starken Selenschicht 41.

Außerhalb des Strahlenganges befindet sich eine Aufladestation 6, die vor einer Röntgenaufnahme die Leiterschicht auflädt, so daß zwischen der Oberfläche der elektrisch leitenden Trommel und der Außenfläche der Photoleiterschicht 41 eine Spannung von z.B. 1.500 V entsteht. Bei einer Röntgenaufnahme steht die Trommel still. Die Oberfläche des Photoleiters wird je nach Intensität der Röntgenstrahlung mehr oder weniger stark entladen, so daß auf der Photoleiterschicht 41 ein Ladungsmuster entsteht, das der räumlichen Verteilung der Intensität der Röntgenstrahlung hinter dem Patienten 2 entspricht.

Nach einer Röntgenaufnahme wird das auf diese Weise erzeugte Ladungsmuster durch eine Ausleseeinrichtung 5 ausgelesen, die sich ebenfalls außerhalb des Strahlenganges befindet. Die Ausleseeinheit enthält eine Anzahl von in Fig. 1 nicht näher dargestellten Influenzsonden, deren wirksame Oberflächen sich im Idealfall auf einer zur Drehachse 7 parallelen Geraden befinden. Der Abstand der Influenzsonden von der Selenschicht 41 beträgt dabei ca. 0,1 mm.

Anstelle eines relativ breiten Strahlenbündels 10, das bei einer Röntgenaufnahme das Strahlungsbild gleichzeitig erzeugt, könnte auch eine Anordnung verwendet werden, bei der durch einen zur Zylinderachse 7 parallelen Schlitz hindurch ein fächerförmiges Strahlenbündel relativ zum Patienten verschoben wird und den während der Aufnahme rotierenden Träger zeitlich nacheinander abschnittsweise belichtet. Eine solche Anordnung ist in der DE-OS 35 34 768 näher beschrieben.

Die Erfindung ist aber auch bei einer ebenen Photoleiteranordnung anwendbar. In diesem Fall müßte die Ausleseeinheit 5 aber zur Erfassung des Ladungsmusters eine zweidimensionale Abtastbewegung ausführen.

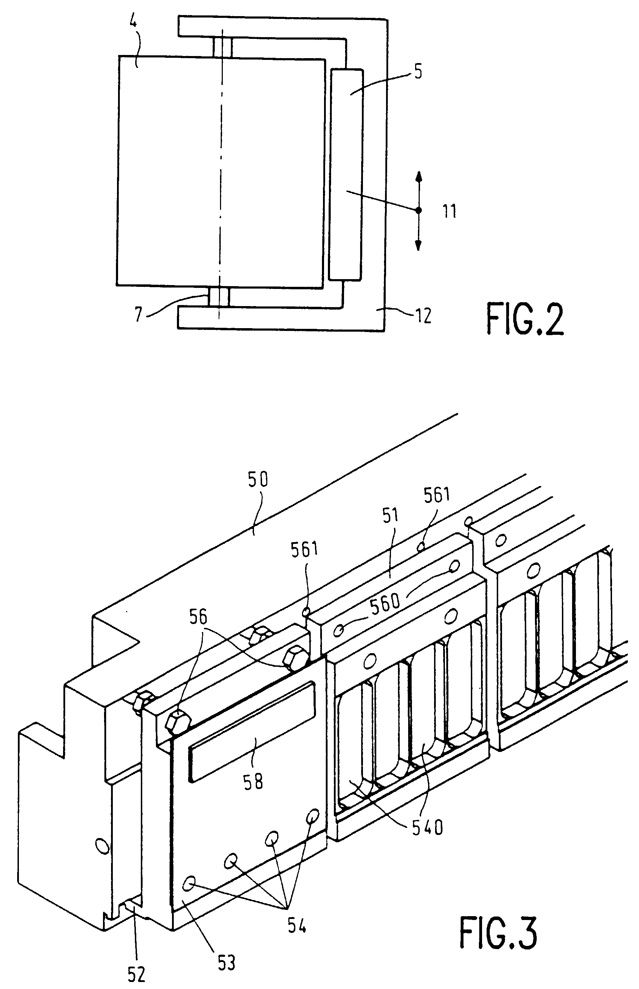

Wie Fig. 2 zeigt, ist die Trommel 4 über ein brückenförmiges Verbindungsteil 12 mit der Ausleseeinheit verbunden. Das Verbindungsteil 12 umfaßt zwei Arme, in denen die Drehachse 7 der Trommel 4 gelagert ist und ein die Arme verbindendes Mittelstück, an der die Ausleseeinheit 5 angeordnet ist.

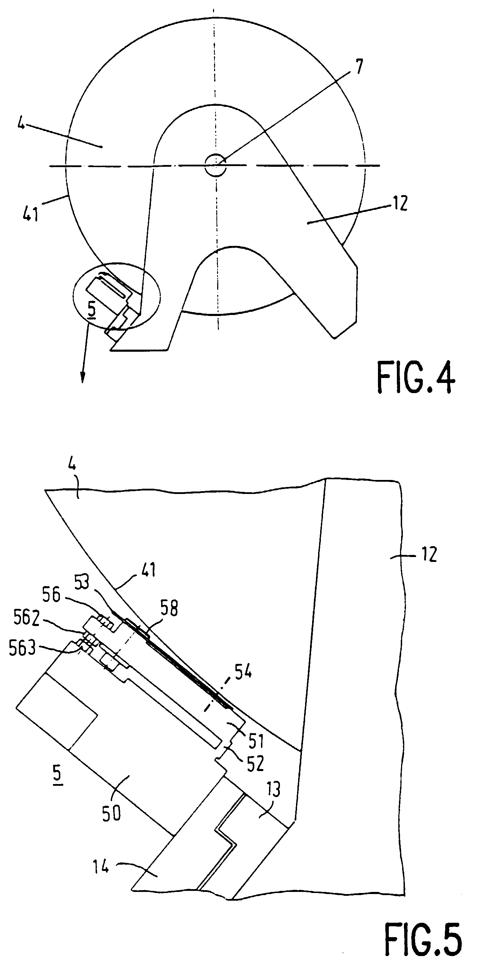

Die Influenzsonden können nach einer Röntgenaufnahme die Ladung auf jeweils nur einem 0,2 mm breiten Streifen der rotierenden Trommel auslesen. Um die gesamte Trommeloberfläche auslesen zu können, ist, wie in Fig. 1 und 2 schematisch angedeutet, ein Antrieb vorgesehen, der die Ausleseeinheit 5 um eine Strecke verschiebt, die etwa dem Abstand zwischen zwei benachbarten Sonden entspricht. Wie sich aus Fig. 4 und Fig. 5 ergibt, ist zu diesem Zweck eine zur Drehachse 7 parallele Führung vorgesehen, die eine am Verbindungsteil 12 befestigte Führungsschiene 13 und eine in ihrer Form dazu komplementäre an der Ausleseeinheit 5 befestigte Führungsschiene 14 umfaßt.

Wie aus Fig. 3 in Verbindung mit Fig. 5 hervorgeht, umfaßt die Ausleseeinheit einen mit der Führungsschiene 14 starr verbundenen, im wesentlichen quaderförmigen Grundkörper 50 und eine Anzahl (z.B. neun) in Längsrichtung des Grundkörpers 50 verteilte Sondenträger 51. Die Sondenträger 51, deren Vorderseite mit Kammern 540 zur Aufnahme der Elektronik für die einzelnen Influenzsonden versehen ist, und deren dem Grundkörper 50 zugewandte Rückseite etwa parallel zu der Grundkörperfläche verläuft, sind an ihrem einen Ende über einen Steg 52 mit dem Grundkörper 50 verbunden. Der Grundkörper 50, die Sondenträger 51 und die dazwischen befindlichen Stege 52 werden vorzugsweise aus einem einzigen Aluminiumblock durch Bearbeitung mit einer numerisch gesteuerten Werkzeugmaschine hergestellt. Es wäre zwar auch möglich, die Einheit insoweit aus einer Anzahl gesonderter Sondenträger, Stege und gegebenenfalls auch Grundkörper zusammenzusetzen, doch wären dann zusätzliche Justierarbeiten erforderlich.

Die Sondensträger 51 tragen die in regelmäßigen Abständen voneinander befindlichen Influenzsonden. Diese sind auf ein Keramiksubstrat 53 in Dickschichttechnik aufgebracht, wie in der DE-OS 39 32 335 im einzelnen beschrieben. Auf jedem Keramiksubstrat befinden sich vier Influenzsonden auf einer Geraden im gleichen Abstand voneinander; diese Influenzsonden sind in Fig. 3 durch Kreise 54 und in Fig. 5 durch die strichpunktierte Linie 54 angedeutet, die den Mittelpunkt der Wirkungsfläche der Influenzsonden kennzeichnet. Die Keramiksubstrate 53 sind auf den Sondenträger 51 mittels einer Befestigungsvorrichtung 58 so befestigt (in Fig. 3 ist das aus Darstellungsgründen nur für den ersten Sondenträger der Fall), daß die Influenzsonden bezüglich des Sondenträgers 51 eine genau definierte Position einnehmen. Die Anordnung ist dabei so getroffen, daß das Keramiksubstrat im Bereich der Influenzsonden tangential zur Trommeloberfläche verläuft - wenn man einmal von dem noch verbleibenden Abstand zwischen Trommeloberfläche und Sondenfläche von 0,1 mm absieht. In der Praxis hat sich gezeigt, daß die Abstände zwischen den Influenzsonden und der Selenschicht 41 aufgrund von Exemplarstreuungen und Fertigungsungenauigkeiten nicht für alle Influenzsonden gleich sind. Einige Sonden können der Photoleiterschicht 41 näher sein, andere können weiter davon entfernt sein.

Um eine Angleichung der Abstände zu erreichen, sind am vom Steg 52 abgewandten freien Ende eines jeden Sondenträgers Verstellmittel vorgesehen, die es gestatten, dieses freie Ende auf den Grundkörper 50 zu- oder von ihm wegzubewegen. Dadurch wird der Abstand zwischen den Influenzsonden 54 und der Photoleiterschicht 41 vergrößert oder verringert. Da der Abstand des freien Endes vom Steg aber wesentlich größer ist als der Abstand der Influenzsonden vom Steg, folgt die Positionsänderung der Influenzsonden der Lageänderung des freien Endes des Sondenträgers nur mit einer bestimmten Übersetzung. Dies hat den Vorteil, daß der Sondenabstand relativ genau justiert werden kann.

Wie insbesondere Fig. 3 zeigt, bestehen die Verstellmittel für jeden Sondenträger aus zwei in Richtung parallel zur Drehachse 7 gegeneinander versetzten Schrauben 56, die durch Bohrungen 560 im Sondenträger in Gewindebohrungen 561 im Grundkörper 50 eingreifen. Durch Anziehen dieser Schrauben werden die Influenzsonden von der Photoleiterschicht 41 entfernt; durch Lösen der Schrauben - gegebenenfalls mit Nachziehen einer auf der Schraube befindlichen Mutter 562 kann der Abstand zwischen den Influenzsonden und der Photoleiterschicht verringert werden. Eine weitere Mutter 563 kontert die Schraube in der Gewindebohrung 561, so daß eine einmal gefundene Einstellung erhalten bleibt. Durch unterschiedliches Verstellen der zu einem Sondenträger gehörenden Schrauben kann die Oberfläche des Keramiksubstrats erforderlichenfalls gegenüber der Photolichtleichterschicht 41 verkippt werden.

Die Ausrichtung der Influenzsonden ist mit einem 3D-Meßmikroskop (optisches Lineal) zu überprüfen - zweckmäßigerweise, bevor der Grundkörper 50 und die Schiene 14 miteinander verbunden werden. Es ist aber auch möglich, die Ausrichtung im montierten Zustand zu überprüfen, indem die Signale gemessen werden, die die Influenzsonden erzeugen, wenn sie eine örtlich gleichmäßig aufgeladene Photoleiterschicht abtasten. Wenn das Signal größer (bzw. Kleiner) ist als ein Durchschnittswert, dann befindet sich die Sonde dichter oder weniger dicht an der Oberfläche als die übrigen Influenzsonden. Durch geeignete Verstellung mittels der Stellschrauben 56 können die Signalamplituden der Influenzsonden aneinander angeglichen werden.

Mit der in der Zeichnung dargestellten Konstruktion ist eine Verstellung der Sonden 54 um bis zu 0,1 mm möglich mit einer Genauigkeit von besser als 0,01 mm.

## Patentansprüche

1. Photoleiteranordnung mit einem Photoleiter (4) zum Umsetzen von Röntgenstrahlung in ein Ladungsmuster und einer Ausleseeinheit (5) zum Umsetzen des Ladungsmusters in elektrische Signale, wobei die Ausleseeinheit eine Mehrzahl von auf einer zur Oberfläche (41) des Photoleiters parallelen Verbindungsgeraden angeordneten Influenzsonden (54) umfaßt, die von einem Grundkörper (50) getragen werden, wobei ein Verbindungsteil (12) vorgesehen ist, der den Photoleiter (4) und den Grundkörper (50) so miteinander verbindet, daß in Richtung senkrecht zur Verbindungsgeraden der Grundkörper (50) eine in bezug auf den Photoleiter definierte Position einnimmt, wobei mehrere der Influenzsonden (54) an einem Sondenträger (51) befestigt sind,
dadurch gekennzeichnet, daß der Sondenträger (51) über einen elastisch biegbaren Steg (52) mit dem Grundkörper (50) verbunden ist und daß an dem Grundkörper und einem dem Steg gegenüberliegenden Teil des Sondenträgers Stellmittel (56) vorgesehen sind, mit deren Hilfe der Abstand und Kippwinkel des Sondenträgers in bezug auf die Oberfläche des Photoleiters und damit die Lage der Influenzsonde in bezug auf die Oberfläche des Photoleiters an wenigstens zwei Stellen einstellbar ist.

2. Photoleiteranordnung nach Anspruch 1,
dadurch gekennzeichnet, daß mehrere mit dem Grundkörper (50) verbundene Sondenträger (51) vorgesehen sind, und daß für jeden Sondenträger Verstellmittel (56) vorgesehen sind.

3. Photoleiteranordnung nach einem der vorhergehenden Ansprüche,
dadurch gekennzeichnet, daß als Verstellmittel Schrauben (56) dienen, die durch den Sondenträger (51) bzw. den Grundkörper hindurch in ein Gewinde (56a) im Grundkörper (50) bzw. im Sondenträger eingreifen.

4. Photoleiteranordnung nach einem der vorhergehenden Ansprüche,
dadurch gekennzeichnet, daß der Abstand der Stellmittel (56) vom Steg (52) größer ist als der Abstand der Influenzsonde (54) vom Steg (52).

## Claims

1. A photoconductor arrangement, comprising a photoconductor (4) for converting X-rays into a charge pattern, and a read-out unit (5) for converting the charge pattern into electric signals, the read-out unit comprising a plurality of influence probes (54) which are arranged along a straight connecting line extending parallel to the surface (41) of the photoconductor and are supported by a base member (50), there being provided a connection piece (12) which interconnects the photoconductor (4) and the base member (50) in such a manner that the base member (50) occupies a defined position relative to the photoconductor in the direction perpendicular to the straight connecting line, a plurality of influence probes (54) being attached to one probe support (51),
characterized in that the probe support (51) is connected to the base member (50) via an elastically bendable connection piece (52) and that on the base member and on the part of the probe support which faces the connection piece there are provided adjusting means (56) which enable adjustment of the distance and the angle of tilt of the probe support relative to the surface of the photoconductor and hence of the position of the influence probe relative to the surface of the photoconductor in at least two positions.

2. A photoconductor arrangement as claimed in Claim 1, characterized in that there are provided a plurality of probe supports (51) which are connected to the base member (50), and that for each probe support adjusting means (56) are provided.

3. A photoconductor arrangement as claimed in one of the preceding Claims, characterized in that the adjusting means are formed by screws (56) which engage, through the probe support (51) or the base member, a thread (56a) in the base member (50) or in the probe support.

4. A photoconductor arrangement as claimed in one of the preceding Claims, characterized in that the distance between the adjusting means (56) and the connection piece (52) is greater than the distance between the influence probe (54) and the connection piece (52).

## Revendications

1. Dispositif photoconducteur muni d'un photoconducteur (4) pour la conversion de rayonnement X en un échantillon de charge et d'une unité de lecture (5) pour convertir l'échantillon de charge en signaux électriques, l'unité de lecture comprenant plusieurs sondes d'influence (54) disposées sur une droite de liaison parallèle à la surface (41) du photoconducteur et supportées par un corps de base (50), une piece de raccordement (12) étant prévue et reliant entre eux le photoconducteur (4) et le corps de base (50) de façon que dans la direction perpendiculaire à la droite de liaison, le corps de base (50) occupe une position définie par rapport au photoconducteur, alors que plusieurs sondes d'influence (54) sont fixées à un support de sondes (51), caractérisé en ce que le support de sondes (51) est relié par l'intermédiare d'une pièce de raccord élastique (52) au corps de base (50) et que des moyens de réglage (56) sont prévus au corps de base et une partie du support de sondes située en face de ladite pièce de raccord, moyens de réglage à l'aide desquels la distance et l'angle de basculement du support de sondes par rapport à la surface du photoconducteur et, de ce fait, la situation de la sonde d'influence par rapport à la surface du photoconducteur peuvent être réglés à au moins deux endroits.

2. Dispositif photoconducteur selon la revendication 1, caractérisé en ce que plusieurs supports de sondes (51) reliés au corps de base (50) sont prévus et que des moyens de réglage (56) sont prévus pour chacque support de sondes.

3. Dispositif photoconducteur selon l'une des revendications précédentes, caractérisé en ce que les moyens de réglage sont constitués par des vis (56), qui s'engrènent à travers le support de sondes (51) respectivement le corps de base dans un filetage (56a) réalisé dans le corps de base (50) respectivement dans le support de sondes.

4. Dispositif photoconducteur selon l'une des revendications précédentes, caractérisé en ce que la distance comprise entre les moyens de réglage (56) et la pièce de raccord (52) est supérieure à la distance comprise entre les sondes d'influence (54) et la pièce de raccord (52).
